# EUROPEAN PATENT SPECIFICATION

(11) **EP 3 148 037 B1**
(45) Date of publication and mention of the grant of the patent: **02.01.2019**
(21) Application number: 16190599.7
(22) Date of filing: 26.09.2016
(51) Int. Cl.: H02J 1/10, H02J 3/38, H02J 9/06, H02J 3/32, B60L 11/18, H02J 7/00

(54) **ENERGY STORAGE SYSTEM**
ENERGIESPEICHERSYSTEM
SYSTEME DE STOCKAGE D'ENERGIE

(30) Priority: 24.09.2015 KR 20150135349
(43) Date of publication of application: 29.03.2017
(73) Proprietor: Samsung SDI Co., Ltd., Giheung-gu Yongin-si, Gyeonggi-do (KR)
(72) Inventor: Park, Sangsoo, Yongin-si, Gyeonggi-do (KR); Cho, Hyunsang, Yongin-si, Gyeonggi-do (KR)
(74) Representative: Gulde & Partner

(56) References cited:
- EP-A1- 2 463 981
- EP-A1- 2 757 652
- EP-A1- 2 916 417
- WO-A1-2014/119049
- AU-A1- 2014 255 802
- JP-A- 2010 097 760
- US-A1- 2011 309 795
- US-A1- 2015 298 571

## Description

### BACKGROUND

### 1. Field

One or more embodiments described herein relate to an energy storage system.

### 2. Description of the Related Art

The development of new renewable energy and global environmental changes continue to be of interest. One form of renewable energy is produced from solar power generation systems, which have proven to be harmless and easy to install and maintain.

Energy storage systems are used to efficiently manage electricity, by storing generated electricity and then supplying the stored electricity during peak-demand or at other times. One type of energy storage system stores surplus electricity, received from a grid at night, in energy storage devices. The stored electricity is then supplied during the day. Such a system may reduce the peak amount of power generation during the day. Some prior art is described in Au 2014 255 802 A1, EP 2 463 981 A1 and JP 2010 097760 A.

However, secondary batteries used in energy storage systems have a limited lifespan that reduces in proportion to the number of times the secondary batteries are charged and discharged. Furthermore, the lifespan of secondary batteries in battery racks may reduce at a high rate if the states of charge (SOC) of the secondary batteries remain within a certain range for an extended period of time.

### SUMMARY

The present invention provides an energy storage system according to claim 1. Preferred embodiments are defined in dependent claims. The invention is set out in the appended set of claims. The embodiments and/ or examples of the following description which are not covered by the appended claims are considered as not being part of the present invention.

### BRIEF DESCRIPTION OF THE DRAWINGS

Features will become apparent to those of skill in the art by describing in detail exemplary embodiments with reference to the attached drawings in which:
FIG. 1 illustrates an embodiment of an energy storage system;
FIG. 2 illustrates a more detailed embodiment of the energy storage system;
FIG. 3 illustrates an embodiment of a battery system;
FIG. 4 illustrates another embodiment of a battery system; and
FIG. 5 illustrates examples of the amount of electricity output from a power conversion unit and the amount of electricity output from an inverter.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art. The embodiments may be combined to form additional embodiments.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

When an element is referred to as being "connected" or "coupled" to another element, it can be directly connected or coupled to the another element or be indirectly connected or coupled to the another element with one or more intervening elements interposed therebetween. In addition, when an element is referred to as "including" a component, this indicates that the element may further include another component instead of excluding another component unless there is different disclosure.

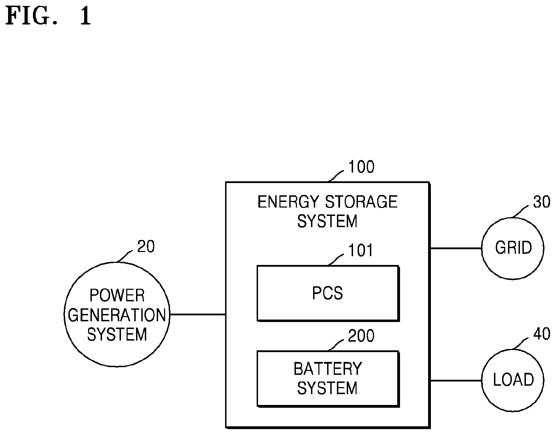

FIG. 1 illustrates an embodiment of an energy storage system 100 connected to various peripheral structures. For example, a power generation system 20 generates electricity from an energy source and supplies the electricity to the energy storage system 100. The power generation system 20 may be, for example, a solar power generation system, a wind power generation system, or a tidal power generation system.

The power generation system 20 may also be another type of power generation system that produces electricity from new renewable energy, e.g., solar heat or geothermal heat. For example, since solar cells generating electric energy from sunlight are easy to install at places such as houses and plants, solar cells may be suitably used in the energy storage system 100 distributed in house and plants.

A grid 30 includes power plants, substations, transmission lines, etc. In a normal state, the grid 30 may supply electricity to the energy storage system 100, which then supplies the electricity to a load 40 or a battery system 200. In one embodiment, the grid 30 may receive electricity from the energy storage system 100. In an abnormal state or when a malfunction occurs, the supply of electricity from the grid 30 to the energy storage system 100 may be interrupted, and the supply of electricity from the energy storage system 100 to the grid 30 may also be interrupted.

The load 40 consumes electricity generated by the power generation system 20, electricity stored in the battery system 200, and/or electricity supplied from the grid 30. A home or plant may be an example of the load 40.

The energy storage system 100 includes a power conversion system (PCS) 101 and the battery system 200. The PCS 101 properly converts electricity supplied from the battery system 200, the power generation system 20, or the grid 30, and supplies the converted electricity.

The energy storage system 100 may supply electricity generated by the power generation system 20 to the battery system 200 or the grid 30. The energy storage system 100 may supply electricity stored in the battery system 200 to the grid 30 or may store electricity supplied from the grid 30 in the battery system 200. In addition, if the grid 30 is in an abnormal state (e.g., a power outage situation), the energy storage system 100 may operate as an uninterruptible power supply (UPS) for supplying electricity to the load 40 without disruption. In addition, the energy storage system 100 may supply electricity, generated by the power generation system 20 or stored in the battery system 200, to the grid 30.

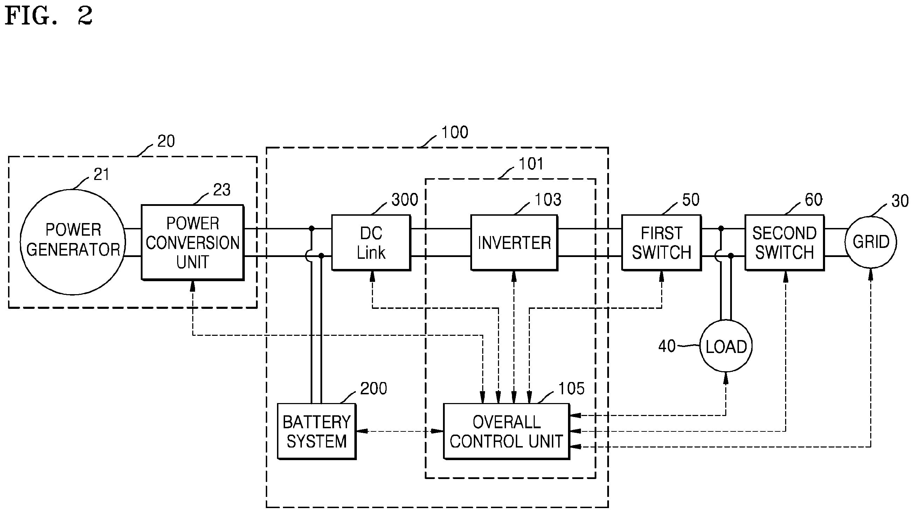

FIG. 2 illustrates a detailed embodiment of the energy storage system 100, which includes the PCS 101 for controlling power conversion, the battery system 200, and a direct current (DC) link 300. The battery system 200 includes a plurality of battery racks 210 and converters. The PCS 101 includes an inverter 103 and an overall control unit 105.

The power generation system 20 includes a power generator 21 and a power conversion unit 23. The power generator 21 generates electricity using an energy source, e.g., sunlight, wind power, tidal power, or another type of renewable energy such as but not limited to solar heat or geothermal heat.

The power conversion unit 23 is connected between the power generator 21 and the DC link 300. The power conversion unit 23 transmits electricity produced by the power generator 21 to the DC link 300. At this time, the power conversion unit 23 converts the output voltage of the power generator 21 to DC link voltage.

The power conversion unit 23 may include a power conversion circuit (e.g., a converter or rectifier circuit) according to the type of the power generator 21. When the power generator 21 is to generate DC electricity, the power conversion unit 23 may include a DC-DC converter. When the power generator 21 is to generate alternating current (AC) electricity, the power conversion unit 23 may include a rectifier circuit for converting AC power to DC power.

When the power generation system 20 is a solar power generation system, the power conversion unit 23 may include a maximum power point tracking (MPPT) converter to maximally convert electricity produced by the power generator 21 according to one or more factors, e.g., the amount of solar radiation and/or temperature. When the power generator 21 does not generate electricity, the power conversion unit 23 may not be operated in order to reduce power consumption.

The DC link 300 is connected between the power conversion unit 23 and the inverter 103 and maintains DC link voltage at a constant level. The level of the DC link voltage may become unstable because of an event, e.g., a momentary voltage drop at the power generation system 20 or the grid 30 or the occurrence of peak power consumption of the load 40. The DC link voltage may be stabilized in order to ensure stable operations of the inverter 103 and the battery system 200. To this end, the DC link 300 is connected between the power generation system 20 and the PCS 101. The DC link 300 may include, for example, a high-capacitance capacitor.

The PCS 101 properly converts electricity of the power generation system 20, the grid 30, and the battery system 200 and supplies the converted electricity to a place or device requiring electricity.

The inverter 103 is a power conversion device connected between the DC link 300 power and a first switch 50. The inverter 103 may convert DC link voltage output from the power generation system 20 and/or the battery system 200 to AC voltage for the grid 30. In charge mode, the inverter 103 may rectify AC voltage of the grid 30 as DC link voltage in order to store electricity of the grid 30 in the battery system 200. The inverter 103 may be a bi-directional inverter having invertible input and output sides.

The inverter 103 may include a filter to remove harmonics from AC voltage output to the grid 30. The inverter 103 may include, for example, a phase locked loop (PLL) circuit to synchronize the phase of AC voltage output from the inverter 103 with the phase of AC voltage of the grid 30, and thus to reduce reactive power. The inverter 103 may perform a function such as limiting the range of voltage variation, improving a power factor, removing a DC component, and/or providing protection during a transient phenomena. The operation of the inverter 103 may be stopped when the inverter 103 is not used in order to reduce power consumption.

The overall control unit 105 may monitor states of the power generation system 20, the grid 30, the battery system 200, and the load 40, and may control operations of the power conversion unit 23, the inverter 103, the battery system 200, the first switch 50, and a second switch 60 according to results of the monitoring, a preset algorithm, etc. The overall control unit 105 may monitor the occurrence of a power failure in the grid 30, whether the power generation system 20 generates electricity, the amount of electricity generated by the power generation system 20, the state of charge (SOC) of the battery system 200, the amount of power consumption of the load 40, time, and/or one or more other conditions. If the amount of electricity for the load 40 is insufficient, for example, due to a power failure in the grid 30, the overall control unit 105 may determine the priorities of power-consuming devices of the load 40 and may control the load 40 so that electricity is supplied to the power-consuming devices of the load 40 according to the priorities.

In the exemplary embodiment, the overall control unit 105 controls charging and discharging operations of the battery racks 210. The overall control unit 105 may determine whether to charge or discharge the battery system 200 based on the difference between the amount of electricity supplied from the inverter 103 to the load 40 and the amount of electricity produced by the power generation system 20. The overall control unit 105 may control the battery system 200 based on the voltage of the DC link 300.

The battery system 200 may be charged with electricity supplied from the grid 30 or the power generation system 20 through the DC link 300 or may supply electricity to the load 40 or the grid 30.

The first and second switches 50 and 60 are connected in series between the inverter 103 and the grid 30 and are turned on or off under the control of the overall control unit 105. The first and second switches 50 and 60 may be individually turned on or off according to the states of the power generation system 20, the grid 30, and the battery system 200.

For example, the first switch 50 may be turned on to supply electricity to the load 40 from the power generation system 20 and/or the battery system 200, or to supply electricity to the battery system 200 from the grid 30. For example, the second switch 60 may be turned on to supply electricity to the grid 30 from the power generation system 20 and/or the battery system 200, or to supply electricity from the grid 30 to the load 40 and/or the battery system 200.

If a power failure occurs in the grid 30, the second switch 60 may be turned off, and the first switch 50 may be turned on. In this case, electricity is supplied to the load 40 from the power generation system 20 and/or the battery system 200 while preventing the electricity from flowing to the grid 30. Then, people such as workers repairing power lines of the grid 30 may be protected from accidents, such as an electric shock, caused by electricity supplied from the energy storage system 100.

The first and second switches 50 and 60 may include switching devices, e.g., relays having a high degree of current-carrying capacity.

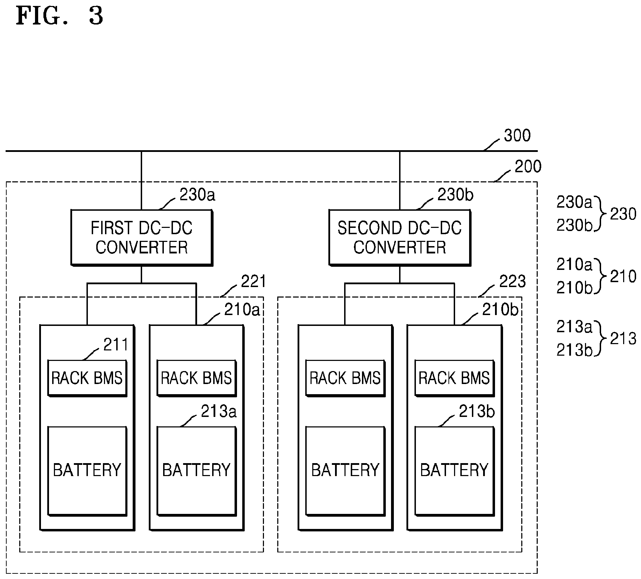

FIG. 3 illustrates an embodiment of the battery system 200 which includes the plurality of battery racks 210 and a plurality of DC-DC converters 230. The battery racks 210 may be divided into a first group 221 and a second group 223. The battery racks 210 of the first group 221 may be referred to as first battery racks 210a, and the battery racks 210 of the second group 223 may be referred as second battery racks 210b. A DC-DC converter 230 connected to the first battery racks 210a may be referred to as a first DC-DC converter 230a, and a DC-DC converter 230 connected to the second battery racks 210b may be referred to as a second DC-DC converter 230b.

The battery racks 210 may include rack battery management systems (BMSs) 211 and batteries 213. The batteries 213 of the first battery racks 210a may be referred to as first batteries 213a, and the batteries 213 of the second battery racks 210b may be referred to as second batteries 213b.

The rack BMSs 211 controls charging and discharging operations of the batteries 213 of the battery racks 210. The rack BMSs 211 may monitor states of the batteries 213 such as SOC, voltage, or current, and may transmit data obtained by the monitoring to the overall control unit 105. The overall control unit 105 may transmit control signals to the rack BMSs 211 based on the data received from rack BMSs 211.

The batteries 213 may store electricity and may include battery cells as substructures. The number of battery cells in each of the batteries 213 may be determined according to a required output voltage. Various secondary battery cells may be used as the battery cells of the batteries 213. Examples of the battery cells may include nickelcadmium battery cells, lead battery cells, nickel metal hydride (NiMH) battery cells, lithium-ion battery cells, and lithium polymer battery cells.

The batteries 213 may include a plurality of battery trays. In addition, the battery racks 210 may include a plurality of tray BMSs that respectively control the battery trays. The tray BMSs may detect states such as voltages, currents, and/or temperatures of battery cells of the battery trays respectively corresponding to the tray BMSs, and may transmit detected data to the rack BMSs 211. The rack BMSs 211 may analyze the data from the tray BMSs to determine the states of the batteries 213 (such as SOC or state of health (SOH)) and may transmit determined data to the overall control unit 105.

The DC-DC converters 230 are connected between the DC link 300 and the batteries 213 of the battery racks 210 to perform conversion between DC link voltage of the DC link 300 and voltages of the batteries 213. In charge mode, the DC-DC converters 230 may convert the DC link voltage of the DC link 300 to a charge voltage for charging the batteries 213. In discharge mode, the DC-DC converters 230 may convert the voltages of the batteries 213 to voltages to be output to the DC link 300. At this time, the levels of voltages output from the DC-DC converters 230 may be higher than the level of the DC link voltage of the DC link 300, thereby discharging the batteries 213. For example, the output voltages of the DC-DC converters 230 may have levels corresponding to a target value of the DC link 300. If the battery system 200 is not to be charged or discharged, the DC-DC converters 230 may not be operated in order to reduce power consumption.

The battery racks 210a of the first group 221 may include some of the battery racks 210. The battery racks 210b of the second group 223 may include the other battery racks 210. The numbers of first battery racks 210a and second battery racks 210b may be equal. For convenience in the following description, it may be assumed that the first battery racks 210a are charged and the second battery racks 210b are not operated in charge mode, and the second battery racks 210b are discharged and the first battery racks 210a are not operated in discharge mode.

According to the exemplary embodiment, the overall control unit 105 may select the operation mode of the battery system 200 from one of a charge mode or a discharge mode based on the amount of electricity output from the inverter 103 and the amount of electricity supplied from the power conversion unit 23 to the energy storage system 100.

For example, if the inverter 103 converts AC voltage of the grid 30 to DC link voltage and applies the DC link voltage to the DC link 300, the overall control unit 105 may operate the battery system 200 in charge mode to charge the battery system 200 with electricity supplied from the grid 30.

In another example, if the amount of electricity output from the power conversion unit 23 is larger than the amount of electricity output from the inverter 103, the overall control unit 105 may operate the battery system 200 in charge mode to charge the battery system 200. On the other hand, if the amount of electricity output from the power conversion unit 23 is smaller than the amount of electricity output from the inverter 103, the overall control unit 105 may operate the battery system 200 in discharge mode to discharge the battery system 200.

In accordance with at least one embodiment, the amount of electricity output from the inverter 103 may refer to the amount of electricity output from the inverter 103 when the inverter 103 converts DC link voltage of the DC link 300 to AC voltage and outputs the AC voltage to the first switch 50.

The overall control unit 105 may control the amount of charge or discharge of the battery system 200 to maintain the level of DC link voltage of the DC link 300 at a preset target value. The overall control unit 105 may control the first and second DC-DC converters 230a and 230b in order to adjust the amounts of charge or discharge of the first batteries 213a and the amounts of charge or discharge of the second batteries 213b.

When the overall control unit 105 selects the operation mode of the battery system 200 from one of the charge mode or the discharge mode, the overall control unit 105 may consider one or more factors,. e.g., the state of the grid 30, the SOC of the battery system 200, the current time, and/or a set peak load value, in addition to the amount of electricity output from the inverter 103 and the amount of electricity output from the power conversion unit 23. For example, if the batteries 213 of the battery system 200 are fully charged, the overall control unit 105 may operate the battery system 200 in discharge mode to improve the efficiency of power consumption. In addition, if the current time is close to a time period during which midnight electricity is available, the overall control unit 105 may operate the battery system 200 in discharge mode.

According to one exemplary embodiment, if the amount of electricity output from the inverter 103 is larger than the amount of electricity output from the power conversion unit 23, the overall control unit 105 may operate the battery system 200 in discharge mode and may adjust the amounts of discharge of the second batteries 213b based on the level of DC link voltage of the DC link 300.

For example, the overall control unit 105 may monitor the voltage level of the DC link 300 to adjust the amounts of discharge of the second batteries 213b by controlling the second DC-DC converter 230b based on the difference between the level of DC link voltage of the DC link 300 and the preset target value. For example, in discharge mode, the overall control unit 105 may adjust the amounts of discharge of the second batteries 213b by controlling the second DC-DC converter 230b in such a manner that the level of voltage output from the second DC-DC converter 230b is higher than the level of DC link voltage of the DC link 300.

According to one exemplary embodiment, if the amount of electricity output from the inverter 103 is smaller than the amount of electricity output from the power conversion unit 23, the overall control unit 105 may operate the battery system 200 in charge mode and may adjust the amounts of charge of the first batteries 213a based on the level of DC link voltage of the DC link 300.

For example, the overall control unit 105 may adjust the amounts of charge of the first batteries 213a by controlling the first DC-DC converter 230a based on the difference between the level of DC link voltage of the DC link 300 and the preset target value. For example, in charge mode, the overall control unit 105 may adjust the amounts of charge of the first batteries 213a by controlling the first DC-DC converter 230a in such a manner that the level of voltage output from the first DC-DC converter 230a is higher than the levels of voltages of the first batteries 213a.

According to the exemplary embodiment, in charge mode, the overall control unit 105 may control the battery system 200, for example, the first and second DC-DC converters 230a and the 230b of the battery system 200 in such a manner that the first batteries 213a are charged and the second batteries 213b are not operated. In addition, in discharge mode, the overall control unit 105 may control the battery system 200, for example, the first and second DC-DC converters 230a and the 230b of the battery system 200 in such a manner that the second batteries 213b are discharged and the first batteries 213a are not operated.

For example, while the operation of the battery system 200 is repeated alternately in charge mode and discharge mode, the first batteries 213a of the first group 221 are repeatedly charged without being discharged and the second batteries 213b of the second group 223 are repeatedly discharged without being charged. In this case, the number of times the batteries 213 are charged or discharged may be significantly decreased.

In charge mode, if the states of charge (SOC) of the first batteries 213a of the first group 221 exceed a first reference value while the first batteries 213a are repeatedly charged without being discharged, the overall control unit 105 may control the first and second DC-DC converters 230a and 230b such that the second batteries 213b of the second group 223 may be charged, and the first batteries 213a of the first group 221 may not be operated. The first reference value may be set, for example, to one of 80%, 85%, 90%, 95%, or 100%.

In discharge mode, if the states of charge (SOC) of the second batteries 213b of the second group 223 become lower than a second reference value while the second batteries 213b are repeatedly discharged without being charged, the overall control unit 105 may control the first and second DC-DC converters 230a and 230b such that the first batteries 213a of the first group 221 may be discharged and the second batteries 213b of the second group 223 may not be operated. The second reference value may be set, for example, to one of 0%, 5%, 10%, 15%, and 20%.

If the states of charge (SOC) of the first batteries 213a of the first group 221 exceed the first reference value, or the states of charge (SOC) of the second batteries 213b of the second group 223 become lower than the second reference value, the overall control unit 105 may control the first and second DC-DC converters 230a and 230b such that the second batteries 213b of the second group 223 may be charged and the first batteries 213a of the first group 221 may not be operated in charge mode, and the first batteries 213a of the first group 221 may be discharged and the second batteries 213b of the second group 223 may not be operated in discharge mode.

In another exemplary embodiment, if the states of charge (SOC) of at least some of the first batteries 213a of the first group 221 exceed the first reference value, the overall control unit 105 may not operate the first batteries 213a of the first group 221 and may charge the second batteries 213b of the second group 223 in charge mode. If the states of charge (SOC) of at least some of the second batteries 213b of the second group 223 become lower than the second reference value, the overall control unit 105 may not operate the second batteries 213b of the second group 223 and may discharge the first batteries 213a of the first group 221 in discharge mode.

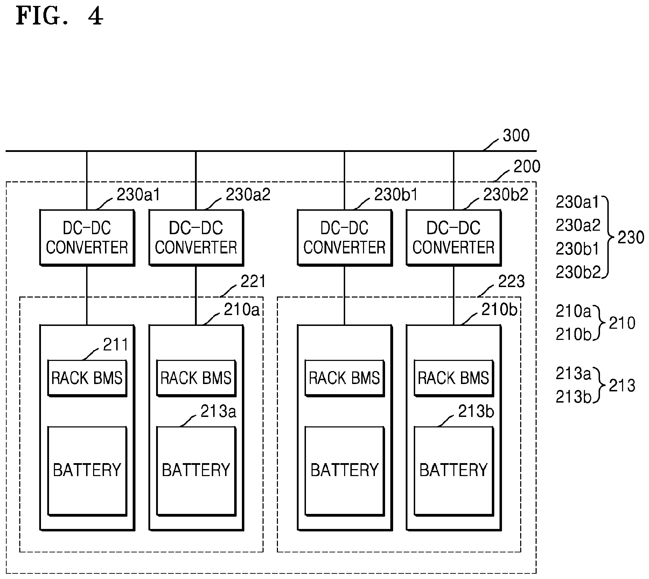

FIG. 4 illustrates another embodiment of battery system 200 which includes a plurality of battery racks 210 and a plurality of DC-DC converters 230. The battery racks 210, rack BMSs 211, and the DC-DC converters 230 may correspond to the battery racks 210, the rack BMSs 211, the DC-DC converters 230 described with reference to FIG. 3.

In the exemplary embodiment of FIG. 3, the first DC-DC converter 230a is commonly connected to the first batteries 213a of the first group 221, and the second DC-DC converter 230b is commonly connected to the second batteries 213b of the second group 223. However, in the embodiment of FIG. 4, the number of the DC-DC converters 230 is equal to the number of the battery racks 210. Also, the DC-DC converters 230 are respectively connected to the battery racks 210. Therefore, the battery racks 210 may be individually controlled, e.g., some of first batteries 213a of a first group 221 may be charged and the other first batteries 213a of the first group 221 may not be operated. In addition, some of second batteries 213b of a second group 223 may be discharged and the other second batteries 213b of the second group 223 may not be operated.

If the states of charge (SOC) of the batteries 213 remain within a certain range for an extended period of time, the lifespan decrease rates of the batteries 213 may increase, e.g., the lifespan decrease rates of the batteries 213 may vary according to the states of charge (SOC) of the batteries 213. For example, if the states of charge (SOC) of the batteries 213 remain within a range from a first critical value to a second critical value for an extended period of time, the lifespans of the batteries 213 may decrease at a high rate. The range between the first and second critical values, in which the lifespans of the batteries 213 decrease at a high rate, may be referred to as a first SOC range. For example, the first critical value may be 40%, and the second critical value may be 60%. The first and second critical values may be determined, for example, based on the types and properties of the batteries 213 of the battery racks 210.

According to the exemplary embodiment, the overall control unit 105 may determine the states of charge (SOC) of the batteries 213. If the SOC of at least one of the batteries 213 is within the first SOC range, the overall control unit 105 may control the DC-DC converters 230 to transfer electricity between the first batteries 213a of the first group 221 and the second batteries 213b of the second group 223. For example, in charge mode, first battery racks 210a may be charged but second battery racks 210b may not be operated. In discharge mode, the first battery racks 210a may not be operated but the second battery racks 210b may be discharged.

In this case, if the SOC of at least one of the first batteries 213a of the first battery racks 210a is within the first SOC range, the overall control unit 105 may charge the at least one first battery 213a with electricity stored in the second batteries 213b of the second battery racks 210b so as to increase the SOC of the at least one first battery 213a above the first SOC range.

If the SOC of at least one of the second batteries 213b of the second battery racks 210b is within the first SOC range, the overall control unit 105 may discharge the at least one second battery 213b and may charge the first batteries 213a of the first battery racks 210a with electricity discharged from the at least one second battery 213b, so as to decrease the SOC of the at least one second battery 213b below the first SOC range. If the states of charge (SOC) of the batteries 213 of the battery racks 210 are adjusted to be outside the first SOC range, the batteries 213 of the battery racks 210 may have long lifespans.

According to another exemplary embodiment, in charge mode or discharge mode, the overall control unit 105 may determine whether the states of charge (SOC) of the batteries 213 are in the first SOC range. For example, if the second batteries 213b of the second group 223 are not operated in charge mode, the overall control unit 105 may check the states of charge (SOC) of the second batteries 213b. If the states of charge (SOC) of the second batteries 213b are within the first SOC range, the overall control unit 105 may discharge the second batteries 213b to charge the first batteries 213a of the first group 221. If the states of charge (SOC) of the first batteries 213a of the first group 221 that are not operated in discharge mode are within the first SOC range, the overall control unit 105 may charge the first batteries 213a with electricity stored in the second batteries 213b of the second group 223 so as to adjust the states of charge (SOC) of the first batteries 213a to be outside the first SOC range.

According to another exemplary embodiment, the overall control unit 105 may individually check the states of charge (SOC) of the battery racks 210 so as to determine whether the SOC of any one of the battery racks 210 is within the first SOC range. If the overall control unit 105 detects at least one battery rack 210 including a battery 213 having a SOC within the first SOC range, the overall control unit 105 may charge or discharge batteries 213 included in a group different from a group in which the at least one battery rack 210 is included, so as to adjust the SOC of the battery 213 of the at least one battery rack 210 to be outside the first SOC range.

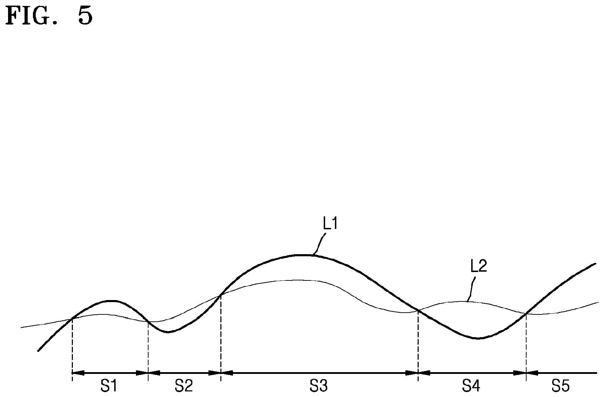

FIG. 5 illustrates an example of the amount of electricity output from the power conversion unit 23 and the amount of electricity output from the inverter 103. Referring to FIG. 5, L1 is a curve showing the amount of electricity output from the power conversion unit 23 with respect to time. L2 is a curve showing the amount of electricity output from the inverter 103 with respect to time. First to fifth periods S1 to S5 are defined based on points at which the curves L1 and L2 meet each other.

As shown in FIG. 5, the amount of electricity output from the power conversion unit 23 may vary with time. Since the amount of power generation using new renewable energy may vary according to the environmental variation of a renewable energy source, the output of the power conversion unit 23 may vary. Similarly, as shown in FIG. 5, the amount of electricity output from the inverter 103 may vary according to the amount of power consumption of the load 40 and the state of the grid 30.

In the first period S1 and the fifth period S5, the amount of electricity L1 output from the power conversion unit 23 is larger than the amount of electricity L2 output from the inverter 103. Therefore, the battery system 200 may be operated in charge mode, e.g., the first batteries 213a of the first group 221 may be charged, and the second batteries 213b of the second group 223 may not be operated.

In the third period S3, the amount of electricity L1 output from the power conversion unit 23 is also larger than the amount of electricity L2 output from the inverter 103. Therefore, the battery system 200 may be operated in charge mode. For example, if the states of charge (SOC) of the first batteries 213a of the first group 221 are greater than the first reference value in the third period S3, the first batteries 213a of the first group 221 may not be operated and the second batteries 213b of the second group 223 may be charged.

In the second period S2, the amount of electricity L1 output from the power conversion unit 23 is less than the amount of electricity L2 output from the inverter 103. Therefore, the battery system 200 may be operated in discharge mode, e.g., the first batteries 213a of the first group 221 may not be operated and the second batteries 213b of the second group 223 may be discharged.

In the fourth period S4, the amount of electricity L1 output from the power conversion unit 23 is also less than the amount of electricity L2 output from the inverter 103. Therefore, the battery system 200 may be operated in discharge mode. For example, if the states of charge (SOC) of the second batteries 213b of the second group 223 are less than the second reference value in the fourth period S4, the second batteries 213b of the second group 223 may not be operated and the first batteries 213a of the first group 221 may be discharged.

In the first to fifth periods S1 to S5, the overall control unit 105 adjusts the amount of charge or discharge of the battery system 200 to maintain the level of DC link voltage of the DC link 300 at a preset target value. For example, in the first, third, and fifth periods S1, S3, and S5, the overall control unit 105 may adjust the amount of charge of the battery system 200 to maintain the level of DC link voltage of the DC link 300 at the preset target value. In the second and fourth periods S2 and S4, the overall control unit 105 may adjust the amount of discharge of the battery system 200 to maintain the level of DC link voltage of the DC link 300 at the preset target value.

According to an exemplary embodiment, in the first, third, and fifth periods S1, S3, and S5, the overall control unit 105 performs a control operation to charge the first batteries 213a of the first group 221 and maintain the second batteries 213b of the second group 223 in a rest state. In second and fourth periods S2 and S4, the overall control unit 105 performs a control operation to discharge the second batteries 213b of the second group 223 and maintain the first batteries 213a of the first group 221 in a rest state.

The amount of electricity output from the power conversion unit 23 may vary frequently with time. Thus, the operation of the battery system 200 may also be frequently switched between charge mode and discharge mode. Even though the operation of the battery system 200 is repeated alternately in charge mode and discharge mode as described above, the number of times that the batteries 213 are charged or discharged may be significantly decreased. This is because the first batteries 213a of the first group 221 are charged without being discharged and the second batteries 213b of the second group 223 are discharged without being charged.

In accordance with another embodiment, an apparatus includes an interface and a controller to determine an operation mode of a battery system from one of a charge mode or a discharge mode, the controller to send one or more signals through the interface to control charging of a first battery rack in the charge mode during which a second battery rack is not operated, and is to send one or more signals through the interface to control discharging of the second battery rack in the discharge mode during which the first battery rack is not operated.

The interface may take various forms. For example, when the interface may include one or more signal lines, leads, ports, wires, inputs, and/or outputs of or connected to the controller. The interface may also be a software interface. The controller may correspond to the overall control unit in any of the aforementioned embodiments.

The methods, processes, and/or operations described herein may be performed by code or instructions to be executed by a computer, processor, controller, or other signal processing device. The computer, processor, controller, or other signal processing device may be those described herein or one in addition to the elements described herein. Because the algorithms that form the basis of the methods (or operations of the computer, processor, controller, or other signal processing device) are described in detail, the code or instructions for implementing the operations of the method embodiments may transform the computer, processor, controller, or other signal processing device into a special-purpose processor for performing the methods herein.

The BMSs, controllers, and other processing features of the embodiments described herein may be implemented in logic which, for example, may include hardware, software, or both. When implemented at least partially in hardware, the BMSs, controllers, and other processing features may be, for example, any one of a variety of integrated circuits including but not limited to an application-specific integrated circuit, a field-programmable gate array, a combination of logic gates, a system-on-chip, a microprocessor, or another type of processing or control circuit.

When implemented at least partially in software, the BMSs, controllers, and other processing features may include, for example, a memory or other storage device for storing code or instructions to be executed, for example, by a computer, processor, microprocessor, controller, or other signal processing device. The computer, processor, microprocessor, controller, or other signal processing device may be those described herein or one in addition to the elements described herein. Because the algorithms that form the basis of the methods (or operations of the computer, processor, microprocessor, controller, or other signal processing device) are described in detail, the code or instructions for implementing the operations of the method embodiments may transform the computer, processor, controller, or other signal processing device into a special-purpose processor for performing the methods described herein.

## Claims

1. An energy storage system (100), comprising:
a battery system (200) including a plurality of battery racks (210), the battery system (200) respectively including a plurality of rack battery management systems (BMSs) (211), the battery racks (210) being divided into a first group (221) comprising at least one first battery rack (210a) including a first battery (213a) and a second group (223) comprising at least one second battery rack (210b) including a second battery (213b);
a direct current (DC) link (300) connected to the battery system (200), the direct current (DC) link (300) comprising a capacitor; and
a controller (105) adapted to determine an operation mode of the battery system (200) from one of a charge mode or a discharge mode based on a DC link voltage of the DC link (300), wherein the controller (105) is adapted to perform a control operation in the charge mode to charge the at least one first battery rack (210a) while the at least one second battery rack (210b) is discharged and is adapted to perform a control operation in the discharge mode to discharge the at least one second battery rack (210b) while the at least one first battery rack (210a) is charged
wherein the first group (221) comprises a plurality of first battery racks (210a), the second group comprises a plurality of second battery racks (210b), and wherein the battery system (200) further comprises a plurality of DC-DC converters (230a1, 230a2, 230b1, 230b2), each DC-DC converter (230a1, 230a2, 230b1, 230b2) being connected between a respective one of the plurality of battery racks (210a, 210b) and the DC link (300)
wherein the rack BMSs (211) are adapted to determine states of charge (SOC) of respective ones of the battery racks (210) wherein the controller (105) is adapted to control the DC-DC converters (230a1, 230a2, 230b1, 230b2) to adjust the SOC of the battery racks (210a, 210b) to be outside a first SOC range
wherein outside the first SOC range lifespans of the batteries (213) decrease at a lower rate than inside the first SOC range
wherein the rack BMSs (211) are adapted to transmit the SOC of the respective ones of the battery racks (210) to the controller (105)
wherein, when the SOC of one of the plurality of first battery racks (210a) is within the first SOC range, the controller (105) is adapted to control charging of the first battery rack (210a) using at least one of the second battery racks (210b) as a power source until the SOC of the first battery rack (210a) is adjusted to exceed the first SOC range
wherein, when the SOC of at least one of the second battery racks (210b) is within the first SOC range, the controller (105) is adapted to discharge the second battery rack (210b) and to charge at least one of the first battery racks (210a) with the electricity discharged from the second battery rack (210b) until the SOC of the second battery rack (210b) is adjusted below the first SOC range.

2. The energy storage system as claimed in claim 1, wherein, when the at least one second battery rack (210b) is discharged to a state of charge (SOC) less than a first reference value, the controller (105) is adapted to control charging of the at least one second battery rack (210b) while the at least one first battery rack (210a) is not charged in the charge mode and to control discharging of the at least one first battery rack (210a) while the at least one second battery rack (210b) is not discharged in the discharge mode.

3. The energy storage system as claimed in one of the preceding claims, wherein, when the at least one first battery rack (210a) is charged to an SOC greater than a second reference value, the controller (105) is adapted to control discharging of the at least one first battery rack (210a) while the at least one second battery rack (210b) is not discharged in the discharge mode and is adapted to control charging of the at least one second battery rack (210b) while the at least one first battery rack (210a) is not charged in the charge mode.

4. The system as claimed in one of the preceding claims, wherein, when the SOC of the second battery rack (210b) in the charge mode is within the first SOC range, the controller (105) is adapted to control discharging of the second battery rack (210b) and to control charging of the first battery rack (210a) with the electricity discharged from the second battery rack (210b) until the SOC of the second battery rack (210b) is adjusted below the first SOC range.

5. The energy storage system as claimed in one of the preceding claims, wherein, when the SOC of the first battery rack (210a) in the discharge mode is within the first SOC range, the controller (105) is adapted to control charging of the first battery rack (210a) using the second battery rack (210b) as a power source until the SOC of the first battery rack (210a) is adjusted to exceed the first SOC range.

6. An apparatus, comprising:
an interface; and
an energy storage system (100) according to one of the preceding claims;
wherein the controller (105) of the storage system (100) is adapted to determine an operation mode of a battery system from one of a charge mode or a discharge mode, to send one or more signals to the interface to control charging of the first battery rack (210a) in the charge mode during which the second battery rack (210b) is discharged and to send one or more signals to the interface to control discharging of the second battery rack (210b) in the discharge mode during which the first battery rack (210a) is charged.

## Patentansprüche

1. Ein Energiespeichersystem (100), aufweisend:
ein Batteriesystem (200), das eine Vielzahl von Batteriegestellen (210) aufweist, wobei das Batteriesystem (200) jeweils eine Vielzahl von Gestellbatteriemanagementsystemen (BMSs) (211) aufweist, wobei die Batteriegestelle (210) in eine erste Gruppe (221), die zumindest ein erstes Batteriegestell (210a), das eine erste Batterie (213a) aufweist, aufweist und eine zweite Gruppe (223), die zumindest ein zweites Batteriegestell (210b), das eine zweite Batterie (213b) aufweist, aufweist, unterteilt sind;
einen Gleichspannungs (DC)-Zwischenkreis (300), der mit dem Batteriesystem (200) verbunden ist, wobei der Gleichspannungs (DC)-Zwischenkreis (300) einen Kondensator aufweist; und
eine Steuerung (105), die angepasst ist, um einen Betriebsmodus des Batteriesystems (200) aus einem eines Lademodus oder eines Entlademodus basierend auf einer DC-Zwischenkreisspannung des DC-Zwischenkreises (300) zu bestimmen, wobei die Steuerung (105) angepasst ist, um einen Steuerbetrieb im Lademodus durchzuführen, um das zumindest eine erste Batteriegestell (210a) zu laden, während das zumindest eine zweite Batteriegestell (210b) entladen wird, und angepasst ist, um einen Steuerbetrieb im Entlademodus durchzuführen, um das zumindest eine zweite Batteriegestell (210b) zu entladen, während das zumindest eine erste Batteriegestell (210a) geladen wird,
wobei die erste Gruppe (221) eine Vielzahl erster Batteriegestelle (210a) aufweist, die zweite Gruppe eine Vielzahl zweiter Batteriegestelle (210b) aufweist und wobei das Batteriesystem (200) ferner eine Vielzahl von DC-DC-Wandlern (230a1, 230a2, 230b1, 230b2) aufweist, wobei jeder DC-DC-Wandler (230a1, 230a2, 230b1, 230b2) zwischen einen jeweiligen der Vielzahl der Batteriegestelle (210a, 210b) und den DC-Zwischenkreis (300) geschaltet ist,
wobei die Gestell-BMSs (211) angepasst sind, um Ladezustände (SOC) jeweiliger der Batteriegestelle (210) zu bestimmen,
wobei die Steuerung (105) angepasst ist, um die DC-DC-Wandler (230a1, 230a2, 230b1, 230b2) zu steuern, um den SOC der Batteriegestelle (210a, 210b) einzustellen, um außerhalb eines ersten SOC-Bereichs zu sein,
wobei außerhalb des ersten SOC-Bereichs Lebensdauern der Batterien (213) langsamer abnehmen als innerhalb des ersten SOC-Bereichs,
wobei die Gestell-BMSs (211) angepasst sind, um den SOC der jeweiligen der Batteriegestelle (210) zur Steuerung (105) zu übertragen,
wobei, wenn der SOC eines der Vielzahl der ersten Batteriegestelle (210a) innerhalb des ersten SOC-Bereichs liegt, die Steuerung (105) angepasst ist, um das Laden des ersten Batteriegestells (210a) mittels zumindest eines der zweiten Batteriegestelle (210b) als Energiequelle zu steuern, bis der SOC des ersten Batteriegestells (210a) eingestellt ist, um den ersten SOC-Bereich zu überschreiten,
wobei, wenn der SOC von zumindest einem der zweiten Batteriegestelle (210b) innerhalb des ersten SOC-Bereichs liegt, die Steuerung (105) angepasst ist, um das zweite Batteriegestell (210b) zu entladen und um zumindest eines der ersten Batteriegestelle (210a) mit der Elektrizität, die vom zweiten Batteriegestell (210b) entladen wird, zu laden, bis der SOC des zweiten Batteriegestells (210b) auf unterhalb des ersten SOC-Bereichs eingestellt ist.

2. Das Energiespeichersystem nach Anspruch 1, wobei, wenn das zumindest eine zweite Batteriegestell (210b) bis zu einem Ladezustand (SOC), der kleiner als ein erster Referenzwert ist, entladen wird, die Steuerung (105) angepasst ist, um das Laden des zumindest einen zweiten Batteriegestells (210b) zu steuern, während das zumindest eine erste Batteriegestell (210a) nicht im Lademodus geladen wird, und um das Entladen des zumindest einen ersten Batteriegestells (210a) zu steuern, während das zumindest eine zweite Batteriegestell (210b) nicht im Entlademodus entladen wird.

3. Das Energiespeichersystem nach einem der vorhergehenden Ansprüche, wobei, wenn das zumindest eine erste Batteriegestell (210a) bis zu einem SOC, der größer als ein zweiter Referenzwert ist, geladen wird, die Steuerung (105) angepasst ist, um das Entladen des zumindest einen ersten Batteriegestells (210) zu steuern, während das zumindest eine zweite Batteriegestell (210b) nicht im Entlademodus entladen wird, und angepasst ist, um das Laden des zumindest einen zweiten Batteriegestells (210b) zu steuern, während das zumindest eine erste Batteriegestell (210a) nicht im Lademodus geladen wird.

4. Das System nach einem der vorhergehenden Ansprüche, wobei, wenn der SOC des zweiten Batteriegestells (210b) im Lademodus innerhalb des ersten SOC-Bereichs ist, die Steuerung (105) angepasst ist, um das Entladen des zweiten Batteriegestells (210b) zu steuern und um das Laden des ersten Batteriegestells (210a) mit der Elektrizität, die vom zweiten Batteriegestell (210b) entladen wird, zu steuern, bis der SOC des zweiten Batteriegestells (210b) auf unterhalb des ersten SOC-Bereichs eingestellt ist.

5. Das Energiespeichersystem nach einem der vorhergehenden Ansprüche, wobei, wenn der SOC des ersten Batteriegestells (210a) im Entlademodus innerhalb des ersten SOC-Bereichs ist, die Steuerung (105) angepasst ist, um das Laden des ersten Batteriegestells (210a) mittels des zweiten Batteriegestells (210b) als Energiequelle zu steuern, bis der SOC des ersten Batteriegestells (210a) eingestellt ist, um den ersten SOC-Bereich zu überschreiten.

6. Eine Vorrichtung, aufweisend:
eine Schnittstelle; und
ein Energiespeichersystem (100) nach einem der vorhergehenden Ansprüche;
wobei die Steuerung (105) des Speichersystems (100) angepasst ist, um einen Betriebsmodus eines Batteriesystems aus einem eines Lademodus oder eines Entlademodus zu bestimmen, ein oder mehrere Signale zur Schnittstelle zu senden, um das Laden des ersten Batteriegestells (210a) im Lademodus, während dessen das zweite Batteriegestell (210b) entladen wird, zu steuern, und ein oder mehrere Signale zur Schnittstelle zu senden, um das Entladen des zweiten Batteriegestells (210b) im Entlademodus, während dessen das erste Batteriegestell (210a) geladen wird, zu steuern.

## Revendications

1. Système de stockage d'énergie (100), comprenant :
un système de batterie (200) comprenant une pluralité de râteliers de batterie (210), le système de batterie (200) comprenant respectivement une pluralité de systèmes de gestion de batteries de râtelier (BMS) (211), les râteliers de batterie (210) étant divisés en un premier groupe (221) comprenant au moins un premier râtelier de batterie (210a) comprenant une première batterie (213a) et un deuxième groupe comprenant au moins un deuxième râtelier de batterie (210b) comprenant une deuxième batterie (213b) ;
une liaison en courant continu (CC) (300) connectée au système de batterie (200), la liaison en courant continu (CC) (300) comprenant un condensateur ; et
un dispositif de commande (105) conçu pour déterminer un mode de fonctionnement du système de batterie (200) parmi l'un d'un mode de charge ou d'un mode de décharge en fonction d'une tension de liaison CC de la liaison en CC (300), le dispositif de commande (105) étant conçu pour effectuer une opération de commande dans le mode de charge de façon à charger l'au moins un premier râtelier de batterie (201a) tandis que l'au moins un deuxième râtelier de batterie (210b) est déchargé et est conçu pour effectuer une opération de commande dans le mode de décharge de façon à décharger l'au moins un deuxième râtelier de batterie (210b) tandis que l'au moins un premier râtelier de batterie (210a) est chargé,
dans lequel le premier groupe (221) comprend une pluralité de premiers râteliers de batterie (210a), le deuxième groupe comprend une pluralité de deuxièmes râteliers de batterie (210b), et dans lequel le système de batterie (200) comprend de plus une pluralité de convertisseurs CC-CC (230a1, 230a2, 230b1, 230b2), chaque convertisseur CC-CC (230a1, 230a2, 230b1, 230b2) étant connecté entre un râtelier respectif de la pluralité de râteliers de batterie (210a, 210b) et la liaison CC-CC (300) ;
dans lequel les BMS de râtelier (211) sont conçus pour déterminer des états de charge (SOC) de râteliers respectifs des râteliers de batterie (210) ;
dans lequel le dispositif de commande (105) est conçu pour commander les convertisseurs CC-CC (230a1, 230a2, 230b1, 230b2) de façon à ajuster le SOC des râteliers de batterie (210a, 210b) de façon à se trouver à l'extérieur d'une première plage de SOC ;
dans lequel, à l'extérieur de la première plage de SOC, les durées de vie des batteries (213) diminuent à une vitesse inférieure à celle à l'intérieur de la première plage de SOC ;
dans lequel les BMS de râtelier (211) sont conçus pour transmettre le SOC des râteliers respectifs parmi les râteliers de batterie (210) au dispositif de commande (105) ;
dans lequel, lorsque le SOC de l'un de la pluralité de premiers râteliers de batterie (210a) se trouve à l'intérieur de la première plage de SOC, le dispositif de commande (105) est conçu pour commander la charge du premier râtelier de batterie (210a) en utilisant au moins l'un des deuxièmes râteliers de batterie (210b) comme source d'alimentation jusqu'à ce que le SOC du premier râtelier de batterie (210a) soit ajusté de façon à dépasser la première plage de SOC ;
dans lequel, lorsque le SOC d'au moins l'un des deuxièmes râteliers de batterie (210b) se trouve à l'intérieur de la première plage de SOC, le dispositif de commande (105) est conçu pour décharger le deuxième râtelier de batterie (210b) et pour charger au moins l'un des premiers râteliers de batterie (210a) avec l'électricité déchargée à partir du deuxième râtelier de batterie (210b) jusqu'à ce que le SOC du deuxième râtelier de batterie (210b) soit ajusté en dessous de la première plage de SOC.

2. Système de stockage d'énergie selon la revendication 1, dans lequel, lorsque l'au moins un deuxième râtelier de batterie (210b) est déchargé à un état de charge (SOC) inférieur à une première valeur de référence, le dispositif de commande (105) est conçu pour commander la charge de l'au moins un deuxième râtelier de batterie (210b) tandis que l'au moins un premier râtelier de batterie (210a) n'est pas chargé dans le mode de charge, et pour commander la décharge de l'au moins un premier râtelier de batterie (210a) tandis que l'au moins un deuxième râtelier de batterie (210b) n'est pas déchargé dans le mode de décharge.

3. Système de stockage d'énergie selon l'une des revendications précédentes, dans lequel, lorsque l'au moins un premier râtelier de batterie (210a) est chargé à un SOC supérieur à une deuxième valeur de référence, le dispositif de commande (105) est conçu pour commander la décharge de l'au moins un premier râtelier de batterie (210a) tandis que l'au moins un deuxième râtelier de batterie (210b) n'est pas déchargé dans le mode de décharge, et est conçu pour commander la charge de l'au moins un deuxième râtelier de batterie (210b) tandis que l'au moins un premier râtelier de batterie (210a) n'est pas chargé dans le mode de charge.

4. Système selon l'une des revendications précédentes, dans lequel, lorsque le SOC du deuxième râtelier de batterie (210b) dans le mode de charge se trouve à l'intérieur de la première plage de SOC, le dispositif de commande (105) est conçu pour commander la décharge du deuxième râtelier de batterie (210b) et pour commander la charge du premier râtelier de batterie (210a) avec l'électricité déchargée à partir du deuxième râtelier de batterie (210b) jusqu'à ce que le SOC du deuxième râtelier de batterie (210b) soit ajusté en dessous de la première plage de SOC.

5. Système de stockage d'énergie selon l'une des revendications précédentes, dans lequel, lorsque le SOC du premier râtelier de batterie (210a) dans le mode de décharge se trouve à l'intérieur de la première plage de SOC, le dispositif de commande (105) est conçu pour commander la charge du premier râtelier de batterie (210a) en utilisant le deuxième râtelier de batterie (210b) comme source d'alimentation jusqu'à ce que le SOC du premier râtelier de batterie (210a) soit ajusté de façon à dépasser la première plage de SOC.

6. Appareil, comprenant :
une interface ; et
un système de stockage d'énergie (100) selon l'une des revendications précédentes ;
dans lequel le dispositif de commande (105) du système de stockage (100) est conçu pour déterminer un mode de fonctionnement d'un système de batterie parmi l'un d'un mode de charge ou d'un mode de décharge, pour envoyer un ou plusieurs signaux à l'interface afin de commander la charge du premier râtelier de batterie (210a) dans le mode de charge durant lequel le deuxième râtelier de batterie (210b) est déchargé, et pour envoyer un ou plusieurs signaux à l'interface afin de commander la décharge du deuxième râtelier de batterie (210b) dans le mode de décharge durant lequel le premier râtelier de batterie (210a) est chargé.
